# EUROPÄISCHE PATENTSCHRIFT

(11) **EP 1 687 602 B1**
(45) Veröffentlichungstag und Bekanntmachung des Hinweises auf die Patenterteilung: **08.07.2015**
(21) Anmeldenummer: 04803336.9
(22) Anmeldetag: 29.11.2004
(51) Int. Cl.: G01K 7/18, G01K 7/16, H01C 3/00, H01C 3/14, H05B 3/74

(54) **TEMPERATURSENSOR AUF BASIS VON WIDERSTANDSMESSUNG UND STRAHLUNGSHEIZK RPER MIT EINEM SOLCHEN TEMPERATURSENSOR**
TEMPERATURE SENSOR BASED ON RESISTANCE MEASURING, AND RADIANT HEATER PROVIDED WITH A TEMPERATURE SENSOR OF THIS TYPE
CAPTEUR DE TEMPERATURE DONT LE FONCTIONNEMENT EST FONDE SUR LA MESURE DE LA RESISTANCE, ET ELEMENT CHAUFFANT RADIANT POURVU D'UN TEL CAPTEUR DE TEMPERATURE

(30) Priorität: 28.11.2003 DE 10356432
(43) Veröffentlichungstag der Anmeldung: 09.08.2006
(73) Patentinhaber: E.G.O. Elektro-Gerätebau GmbH, 75038 Oberderdingen (DE)
(72) Erfinder: THIMM, Wolfgang, 76137 Karlsruhe (DE); WITTENHAGEN, Wolfgang, 74831 Gundelsheim (DE)
(74) Vertreter: Patentanwälte Ruff, Wilhelm, Beier, Dauster & Partner
(86) Internationale Anmeldenummer: PCT/EP2004/013525
(87) Internationale Veröffentlichungsnummer: WO 2005/052528

(56) Entgegenhaltungen:
- DE-A1- 19 537 431
- DE-A1- 19 925 367
- FR-A- 2 521 293
- GB-A- 2 360 591
- US-A- 2 685 015
- US-A- 3 267 733
- US-A- 3 786 220

## Beschreibung

Die Erfindung betrifft eine Verwendung einer an sich üblichen Glüh- oder Halogenlampe und eines an sich üblichen Halogenstrahlungsheizers.

Es ist bekannt, Kochzonen von Kochfeldern mit einer Sensorik zu versehen, die bei Erreichen einer maximal zulässigen Temperatur des Kochfeldes dessen Beheizung ausschaltet. In der Regel handelt es sich dabei um Stabausdehnungsregler, die aus zwei verschiedenen Materialien mit unterschiedlichem Wärmeausdehnungskoeffizienten aufgebaut sind. Durch die verschiedene Ausdehnung in Folge einer Erhitzung werden bei einer konstruktiv vorgegebenen Temperatur zwei Kontakte voneinander getrennt, so dass die Stromzufuhr zur Heizvorrichtung der Kochzone unterbrochen wird. Bezüglich solcher Stabausdehnungsregler wird als nachteilig angesehen, dass die Veränderung des Schaltpunktes der Stabausdehnungsregler einen großen Aufwand erfordert und dass Stabausdehnungsregler auf Temperaturänderungen nur träge reagieren.

Aus der DE 195 37 431 A1 ist ein Widerstandsthermometer bekannt mit einen Schutzrohr aus Keramik oder refraktärem Metall. Darin ist als Messelement ein Draht angeordnet, der Molybdänsilizid enthält.

Aus der FR 2 521 293 A3 ist ein Verfahren zur Temperaturerfassung bekannt. Dort wird eine Glühlampe verwendet, deren Umhüllung aus Glas entfernt ist. Somit kann der Glühdraht vollständig der Umgebungsluft ausgesetzt sein und sehr gut zu deren Temperaturerfassung verwendet werden.

Aus der DE 199 25 367 A1 ist ein Temperatursensor zur Verwendung in einem Kochfeld bekannt. Dazu ist an einer Strahlungsheizeinrichtung neben einem üblichen länglichen Stabregler als Temperaturfühler ein ohmscher Widerstand als Temperatursensor angeordnet. Dieser Temperatursensor kann durch einen Metalldraht, vorzugsweise durch einen Platin-Draht, gebildet sein. Er kann auf einem Abstützbauteil gelagert sein.

Aus der US 2,685,015 A ist ein Widerstandsthermometer bekannt, bei dem in einem Glaszylinder ein Widerstandsdraht auf einen Kern aufgewickelt angeordnet ist. Dünne Anschlussdrähte laufen zu dem Widerstandsdraht. Der Widerstandsdraht ist dabei über seine gesamte Länge direkt auf den Kern aufgewickelt.

Aus der GB 2 360 591 A ist ein weiterer Temperatursensor für eine Strahlungsheizeinrichtung eines Kochfeldes bekannt. Der Temperatursensor weist ein Sensorgehäuse auf und darin ein Sensorelement in Form eines ohmschen Widerstands, beispielsweise als Platin-Widerstand. Alternativ kann er ein Thermoelement sein.

Aus der US 3,786,220 ist ein Temperatursensor bekannt, bei dem ein Thermistor-Material, beispielsweise ein Halbleitermaterial, in Glasfritte eingebettet ist.

### Aufgabe und Lösung

Der Erfindung liegt die Aufgabe zugrunde, eingangs genannte Verwendungen zu schaffen, mit denen die Nachteile des Standes der Technik vermieden werden können und insbesondere eine hohe Genauigkeit und eine hohe Sicherheit bei geringen Produktionskosten erreicht werden kann.

Gelöst wird diese Aufgabe durch eine Verwendung mit den Merkmalen des Anspruchs 1, 2 oder 3. Vorteilhafte sowie bevorzugte Ausgestaltungen der Erfindung sind in den weiteren Ansprüchen angegeben und werden im folgenden näher erläutert. Der Wortlaut der Ansprüche wird durch ausdrückliche Bezugnahme zum Inhalt der Beschreibung gemacht.

Ein Temperatursensor weist ein Sensorelement auf, welches aus einem Material mit positivem Temperaturkoeffizienten, insbesondere mit einem gegenüber Edelmetallen höheren Temperaturkoeffizienten, besteht. Darüber hinaus weist der Temperatursensor eine Umhüllung auf, innerhalb derer das Sensorelement angeordnet ist. Ein solcher Temperatursensor erlaubt jederzeit eine elektronische Ermittlung der aktuellen Temperatur. Um die eingangs beschriebene Wirkung des Ausschaltens eines Kochfeldes bei Erreichen einer Maximaltemperatur zu erzielen, kann ein solcher Temperatursensor entweder mit einer dafür vorgesehenen einfachen Schaltung oder mit einer Steuereinheit des Kochfeldes verbunden sein, die den Widerstand auswertet und gegebenenfalls die betreffende Kochzone ausschaltet oder programmgemäß steuert. Durch den positiven Temperaturkoeffizienten wird erreicht, dass der Widerstand des Temperatursensors mit steigender Temperatur ansteigt. Durch eine Messung des Spannungsabfalls am Sensorelement sowie des Stromflusses durch das Sensorelement kann der Widerstand errechnet und daraus auf die Temperatur geschlossen werden. Alternativ ist es möglich, eine Stromquelle mit konstanter Stromstärke oder eine Spannungsquelle mit konstanter Spannung vorzusehen, so dass nur die jeweils andere Größe gemessen werden muss. Wenn die Anforderungen an die Genauigkeit der Temperaturmessung hoch sind, ist es möglich, statt der üblichen Zweileiterschaltung eine Vierleiterschaltung zu verwenden, bei der zwei Leiter dazu dienen, dem Sensorelement einem konstanten Strom zuzuführen, und die beiden anderen Leiter dazu dienen, den Spannungsabfall am Widerstand zu ermitteln. Vorteil der Vierleiterschaltung ist, dass der Widerstand der Zuleitungen nicht ins Gewicht fällt. Je höher der Temperaturkoeffizient ist, desto höher ist die Genauigkeit der Messergebnisse. Ein hoher Temperaturkoeffizient des Sensorelements führt zu einer großen Veränderung des Widerstandswertes bei geringer Veränderung der Temperatur. Der erfindungsgemäße Temperatursensor weist eine hohe Reaktionsgeschwindigkeit auf. Vorteilhaft ist darüber hinaus, dass nur geringe Produktionskosten anfallen, da keine Mechanik notwendig ist. Bei der Verwendung eines solchen Temperatursensors für Kochzonen eines Kochfeldes ergibt sich darüber hinaus der Vorteil, dass der Temperatursensor im Gegensatz zu den bislang üblichen Stabausdehnungsreglern optisch unauffällig ist, und das Glühbild der Kochzone nicht oder weniger stört.

Die Umhüllung weist vorteilhaft zumindest teilweise eine hohe Durchlässigkeit für Wärmestrahlung auf. Die Umhüllung verfolgt vorteilhaft den Zweck, einen mechanischen Schutz für den Temperatursensor darzustellen. Darüber hinaus kann sie eine elektrische Isolationsschicht darstellen und somit ermöglichen, den Temperatursensor auch an leitenden Oberflächen anzubringen. Mittels der hohen Durchlässigkeit für Wärmestrahlung ist gewährleistet, dass das Sensorelement von der Wärmestrahlung erreicht wird und somit eine Widerstandsveränderung eintritt.

In einer Weiterbildung der Erfindung besteht der temperaturabhängige Widerstand aus einem Material mit einem gegenüber Platin höheren Temperaturkoeffizienten.

In einer Weiterbildung der Erfindung weist die Umhüllung wenigstens teilweise eine hohe Durchlässigkeit für Wärmestrahlung auf. Mittels der hohen Durchlässigkeit für Wärmestrahlung ist gewährleistet, dass das Sensorelement von der Wärmestrahlung erreicht wird und somit eine Widerstandsveränderung eintritt. In einer Weiterbildung der Erfindung füllt das Sensorelement die Umhüllung vollständig aus.

In einer Weiterbildung der Erfindung besteht die Umhüllung aus einem isolierenden Material vorzugsweise aus Glas, Keramik oder Quarz, oder weist mehrere Schichten auf, von denen die innerste aus einem isolierenden Material besteht. Das isolierende Material ermöglicht die Anbringung des Temperatursensors unmittelbar an elektrisch leitenden Komponenten, insbesondere eines Kochfeldes. Bei Umhüllungen mit mehreren Schichten ist es möglich, nur eine Schicht isolierend auszuführen und weitere Schichten mit anderen Aufgaben vorzusehen.

In einer Weiterbildung der Erfindung ist die Umhüllung teilweise oder ganz mit mindestens einer Schicht aus einem mechanisch stabilen Material, vorzugsweise Metall, ausgebildet. Eine solche Stabilisierungsschicht führt zu einer verminderten Anfälligkeit gegen mechanische Belastungen. Die Haltbarkeit des Temperatursensors wird dadurch erhöht.

In einer Weiterbildung der Erfindung ist die Umhüllung gasdicht abgeschlossen, wobei vorzugsweise ein Innendruck der Umhüllung geringer als ein Außendruck der Umhüllung ist oder insbesondere der Innenraum evakuiert ist. Durch eine derartig gestaltete Umhüllung ist das Sensorelement gegen Verglühen infolge des Stromflusses geschützt. Insbesondere bei einigen PTC-Sensorelementen aus Keramikwerkstoffen ist der Schutz vor Sauerstoff zwingend notwendig.

In einer Weiterbildung der Erfindung weist der Temperatursensor innerhalb der Umhüllung Schutzgas, vorzugsweise Stickstoff, Helium, Halogen oder ein Edelgas wie beispielsweise Argon oder ein Gemisch entsprechender Gase auf. Durch die Verwendung des Schutzgases kann darauf verzichtet werden, den Druck in der Umhüllung abzusenken, um zu verhindern, dass das Sensorelement mit Sauerstoff in Berührung kommt. Stattdessen wird bei ähnlichen Druckverhältnissen innerhalb und außerhalb der Umhüllung ein Schutzgas verwendet, welches die Haltbarkeit des Sensorelements nicht beeinträchtigt.

In einer Weiterbildung der Erfindung weist die Umhüllung zumindest teilweise eine verminderte Strahlungsdurchlässigkeit für Wärmestrahlung auf, wobei vorzugsweise die Bereiche verminderter Strahlungsdurchlässigkeit reflektierend ausgebildet sind. Durch solche Bereiche verminderter Strahlungsdurchlässigkeit ist es möglich, eine gerichtete Temperaturmessung vorzunehmen. Eine solche gerichtete Temperaturmessung gestattet es, nur die Wärmestrahlung aus bestimmten Richtungen mittels des Sensorelementes zu registrieren. Wärmestrahlung, die aus Richtungen kommt, in welchen die Umhüllung eine verminderte Strahlungsdurchlässigkeit aufweist, nimmt dementsprechend geringeren Einfluss auf den Messwert. Durch eine bezüglich Wärmestrahlung reflektierende Ausbildung von Bereichen wird die Einflussnahme, dieser Wärmestrahlung komplett vermieden. Bei der Verwendung des erfindungsgemäßen Temperatursensors für Kochfelder ist es so beispielsweise möglich, mittels des Temperatursensors selektiv die Temperatur der Glaskeramik zu ermitteln, ohne dass die Wärmeabstrahlung des Strahlungsheizkörpers unmittelbar wesentlich Einfluss auf die Messung nimmt.

In einer Weiterbildung der Erfindung ist das Material des Sensorelements eine Eisenbasislegierung, deren Kristallstruktur im zu messenden Temperaturbereich keiner Umwandlung unterliegt. Der zu messende Temperaturbereich wird dabei durch übliche Betriebstemperaturen, beispielsweise eines Kochfeldes, bestimmt. Hierbei handelt es sich in der Regel um Temperaturen von einigen hundert Grad Celsius, üblicherweise ca. 600°C. Das Beibehalten der speziellen Kristallstruktur weist den Vorteil auf, dass ein Phasenübergang von α-Eisen zu γ-Eisen im bestimmungsgemäßen Betrieb vermieden wird. Auf diese Art und Weise weist der Temperatursensor eine bessere Haltbarkeit auf.

In einer Weiterbildung der Erfindung weist das Sensorelement eine geringe Wärmekapazität oder einen geringen Querschnitt auf.

In einer Weiterbildung der Erfindung ist eine übliche Glüh- oder Halogenlampe als Temperatursensor des Strahlungsheizkörpers vorgesehen. Eine solche Lösung ist aufgrund der Massenproduktion von Glühund Halogenlampen bezüglich der Kosten ideal. Die Kosten einer herkömmlichen Glüh- oder Halogenlampe liegen deutlich unter jenen eines Stabausdehnungsreglers.

Ebenfalls als erfindungsgemäßer Temperatursensor kann ein an sich üblicher Halogen-Strahlungsheizer genutzt werden. Möglich ist beispielsweise die Temperaturmessung bei einem getaktet betriebenen Halogen-Strahlungsheizer in jenen Phasen, in denen dieser nicht heizt. Bei Kochzonen mehreren unabhängig voneinander ansteuerbaren Halogen-Strahlungsheizern besteht die Möglichkeit, einen nicht zum Heizen genutzten Halogen-Strahlungsheizer als Temperatursensor zu verwenden.

Grundsätzlich kann erfindungsgemäß bei allen Elektrowärmegeräten mit Innenbeleuchtung, beispielsweise bei Backöfen oder bei Mikrowellenöfen, eine Lampe als Sensor genutzt werden. So ist es beispielsweise denkbar, in einem getakteten Betrieb eine Lampe zeitweise als Innenbeleuchtung und zeitweise als Temperatursensor zu nutzen. Daneben bietet es sich auch an, neben einer ersten Lampe, die lediglich eine Beleuchtungsfunktion erfüllt, eine zweite Lampe im Innenraum eines Elektrowärmegeräts anzuordnen, welche bei geschlossenen Klappe als Temperatursensor und bei geöffneter Klappe als zusätzliche Beleuchtung fungiert.

Neben der Funktionalität, die Temperatur zu ermitteln, ist es möglich, einen erfindungsgemäßen Temperatursensor bei Nutzung seiner Eigenschaften als Spule, insbesondere auch als Spule mit einem Linear-Leiter, als Topferkennungssensor zu verwenden. Solche Sensoren können Vorhandensein und auch Größe eines auf der Kochzone stehenden Topfes erkennen durch ein elektromagnetisches Feld, dessen Eigenschaften sich ändern durch einen nahe oder darin befindlichen Topf. Dies ist beispielsweise in der EP-A 1 276 350 beschrieben, auf die hiermit ausdrücklich Bezug genommen wird.

Eine weitere Möglichkeit bietet die Option, die Temperatur des Sensors zum sogenannten sensorgesteuerten Kochen mit vorgebbaren Temperaturverläufen zu nutzen. Damit soll ein Kochvorgang sozusagen gesteuert wie von selber ablaufen. Insbesondere der gegenüber Platin höhere Temperaturkoeffizient ist hierbei vorteilhaft, da die Genauigkeit höher ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jedes für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Querschnitts-Ansicht eines Temperatursensors in einer ersten Ausführungsform,
- Fig. 2: ein Diagramm, in dem der relative Widerstand eines Platinwiderstandes und einer handelsüblichen Halogenlampe über der Temperatur dargestellt sind,
- Fig. 3: eine Darstellung einer Draufsicht auf einen Strahlungsheizkörpers mit einem Temperatursensor in einer zweiten Ausführungsform,
- Fig. 4: eine Darstellung einer Draufsicht auf einen Strahlungsheizkörpers mit einem Temperatursensor in einer dritten Ausführungsform,
- Fig. 5: eine Darstellung einer Draufsicht auf einen Strahlungsheizkörpers mit einem Temperatursensor in einer vierten Ausführungsform und
- Fig. 6: eine Darstellung einer Draufsicht auf einen Strahlungsheizkörpers mit zwei Temperatursensoren in der vierten Ausführungsform.

### Detaillierte Beschreibung der Ausführungsbeispiele

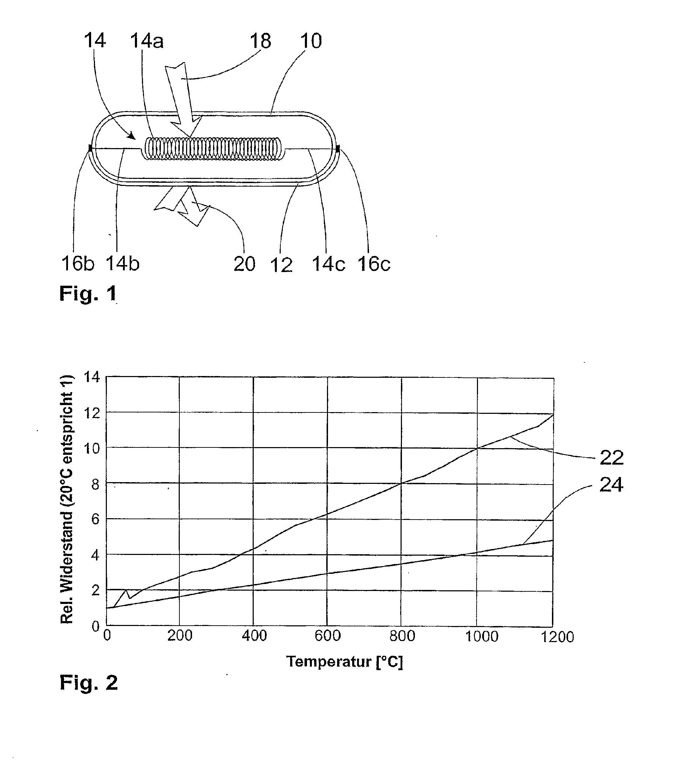

In Fig. 1 ist ein erfindungsgemäßer Temperatursensor dargestellt. Dieser weist eine Umhüllung 10 mit rohrähnlicher Ausdehnung auf. Die Umhüllung 10 ist an beiden Enden geschlossen und somit in ihrer Gesamtheit gasdicht abgeschlossen. Auf einer Seite weist die Umhüllung eine Spiegelschicht 12 auf. Auf dieser Seite kann keine Wärmestrahlung in die Umhüllung eindringen. Innerhalb der Umhüllung 10 ist ein Sensorelement 14 angeordnet, welches parallel zur Haupterstreckungsrichtung der Umhüllung 10 ausgerichtet ist. Das Sensorelement 14 weist eine Wendel 14a sowie zwei Zuleitungsdrähte 14b, 14c auf. Die Zuleitungsdrähte 14b, 14c sind an den Enden der Umhüllung aus dieser hinausgeführt und münden in Anschlusskontakten 16b, 16c des Temperatursensors.

Wärmestrahlung 18, die auf der nicht verspiegelten Seite auf die Umhüllung trifft, fällt in die Umhüllung 10 ein und erwärmt dort das Sensorelement 14, insbesondere die Wendel 14a. Aufgrund der PTC-Eigenschaften der Wendel 14a erhöht sich mit der Temperatur der elektrische Widerstand. Eine Messung der Spannung an den Anschlusskontakten 16b und 16c sowie der Stromstärke gestattet Rückschlüsse auf den Widerstand der Wendel 14a und somit auf die Temperatur. Wärmestrahlung 20, die auf der verspiegelten Seite auf die Umhüllung trifft, kann nicht in diese eindringen und wird stattdessen von dieser reflektiert. Sie hat im wesentlichen keinen Einfluss auf die Wärme des Sensorelements 14.

Fig. 2 zeigt ein Diagramm, in welchem die relative Widerstandsveränderung in Abhängigkeit einer Temperatur dargestellt ist. In der Horizontalen ist der Temperaturbereich von 0°C bis 1000°C aufgetragen. Die Vertikale bildet den relativen Widerstand. Für diesen ist bei Raumtemperatur der Wert 1 definiert. Der Graph 22 basiert dabei auf einer herkömmlichen Halogenlampe, während der Graph 24 das Verhalten eines Platin-PTC-Widerstandes zeigt. Es ist zu erkennen, dass der relative Widerstand der herkömmlichen Halogenlampe, wie er in dem Graph 22 dargestellt ist, bei steigender Temperatur schneller ansteigt als der relative Widerstand des Platin-PTC-Widerstandes, der im Graph 24 dargestellt ist. Während sich beispielsweise der Widerstand der herkömmlichen Halogenlampe bei einem Anstieg der Temperatur von Raumtemperatur bis zu einer Temperatur von 1000°C ungefähr verzehnfacht, führt eine entsprechende Erwärmung des Platin-PTC-Elements nur zu einer Widerstandsveränderung um einen Faktor von ca. vier. Zu erkennen ist darüber hinaus, dass der Graph 24, der das Verhalten des Platin-PTC-Widerstandes wiedergibt, weitestgehend einen sehr linearen Anstieg aufweist. Der Graph 22 zeigt, dass bei einer herkömmlichen Halogenlampe das Verhältnis zwischen relativem Widerstand und Temperatur nicht vollständig proportional ist. Die Abweichung von der Proportionalität ist allerdings nicht gravierend und steht der Verwendung einer herkömmlichen Halogenlampe als Temperatursensor nicht im Wege.

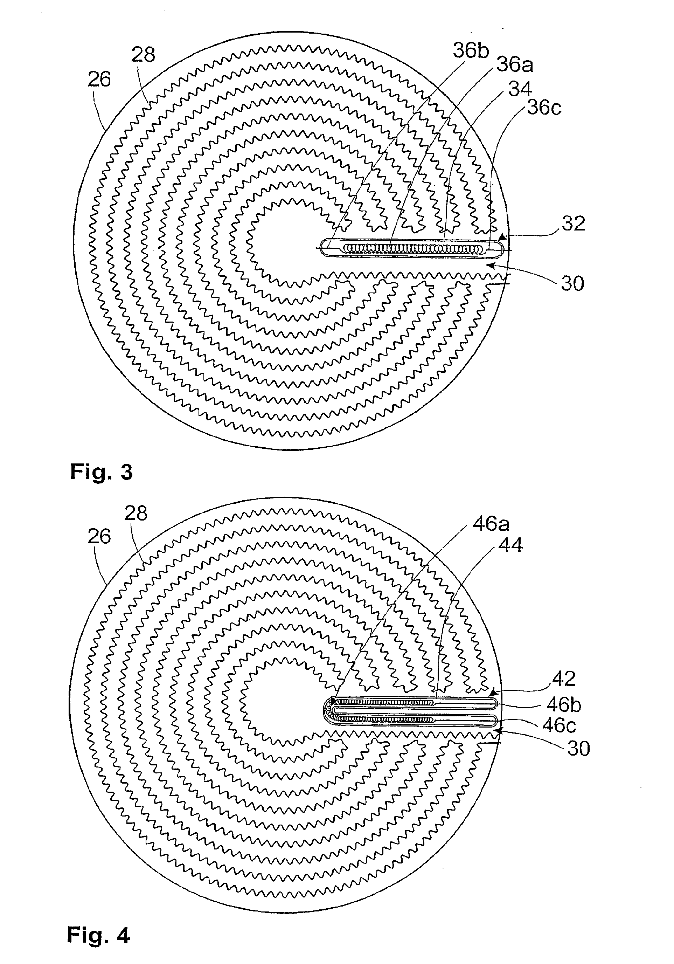

Die Fig.3 bis 6 zeigen jeweils einen Strahlungsheizkörper 26 mit einem erfindungsgemäßen Temperatursensor 32, 42, 50, 60, 64 in verschiedenen Ausführungsformen. Die Strahlungsheizkörper weisen jeweils ein in konzentrischen Kreisabschnitten angeordnetes Heizband 28 auf. Alle vier Strahlungsheizkörper verfügen über einen vom Heizband 28 ausgesparten Bereich 30, in dem jeweils ein Temperatursensor 32, 42, 50 beziehungsweise zwei Temperatursensoren 60, 64 angeordnet sind.

Der in Fig. 3 dargestellte Temperatursensor 32 verfügt über eine rohrförmige, gerade Umhüllung, die an beiden Enden gasdicht verschlossen ist. An den beiden Enden der Umhüllung 34 sind Anschlussdrähte 36b, 36c in die Umhüllung geführt. Zwischen den Anschlussdrähten 36b, 36c ist ein Sensorelement 36a in Form einer Wendel angeordnet. Der Anschlussdraht 36c ist seitlich aus dem Strahlungsheizkörper hinausgeführt, während der Anschlussdraht 36b in einer in der Fig. 3 nicht erkennbaren Art und Weise nach unten durch den Strahlungsheizkörper hindurch herausgeführt ist.

Der in der Fig. 4 dargestellte Strahlungsheizkörper weist einen anders gearteten Temperatursensor 42 auf. Dieser verfügt über eine Umhüllung 44, welche die Form eines U-förmig gebogenen Rohrs aufweist. Dadurch ergeben sich zwei Schenkel, die bezogen auf den Strahlungsheizkörper nach außen weisen. In ähnlicher Art und Weise wie der Temperatursensor 32 des in Fig. 3 dargestellten Strahlungsheizkörpers weist auch der Temperatursensor 42 zwei Zuleitungsdrähte 46b, 46c und ein Sensorelement in Form einer Wendel 46a auf. Durch die U-förmige Ausbildung des Temperatursensors 42 ergibt sich der konstruktive Vorteil, beide Zuleitungsdrähte 46b, 46c an der Außenseite des Strahlungsheizkörpers herausführen zu können, statt eine technisch wesentlich aufwendigere Zuführung im Bereich der Mitte des Strahlungsheizkörpers realisieren zu müssen. Dies könnte auch durch eine andere Drahtführung in der Umhüllung erreicht werden.

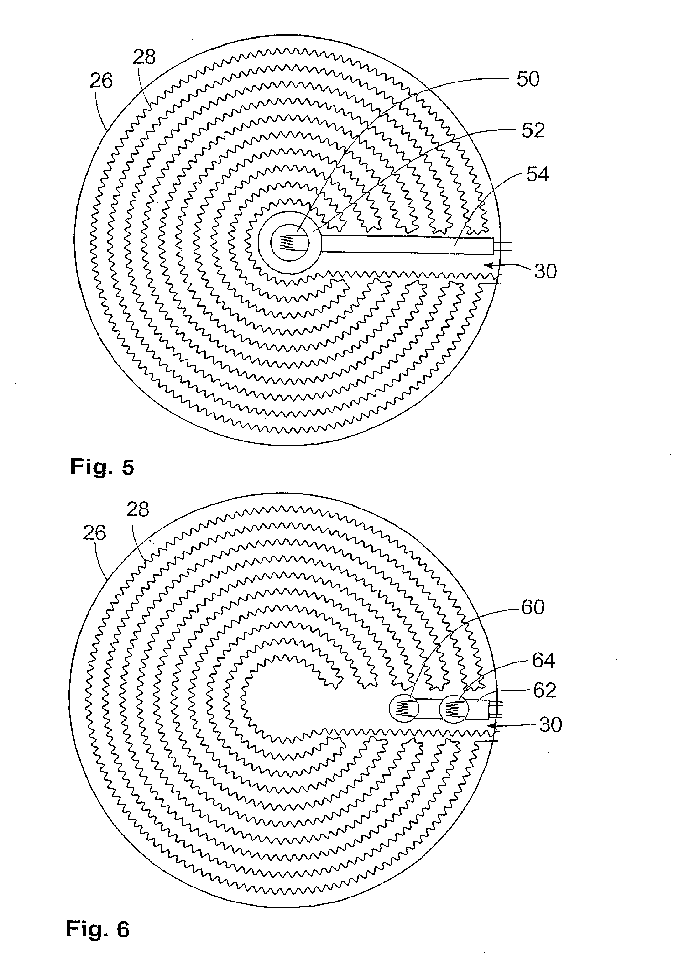

Der in Fig. 5 dargestellte Strahlungsheizköper 26 weist einen erfindungsgemäßen Temperatursensor 50 auf. Dieser weist eine kugelförmige Umhüllung auf, in der eine Wendel angeordnet ist. Er könnte auch an anderer Stelle des Strahlungsheizkörpers angeordnet sein, beispielsweise näher am Rand. Zwischen dem Temperatursensor 50 und dem Untergrund des Strahlungsheizkörpers 26 ist ein Reflektor 52 angeordnet. Dadurch ist gewährleistet, dass die durch den Temperatursensor 50 gemessene Temperatur weitestgehend von der von oben kommenden Wärmestrahlung beeinflusst wird. Von unten kommende Wärmestrahlung wird größtenteils reflektiert und verfälscht die Messung somit kaum. Die Leitungen zum Temperatursensor sind in einer isolierende Ummantelung 54 geführt, die dafür sorgt, dass der Leitungswiderstand weitgehend konstant bleibt und damit ebenfalls keinen Einfluss auf die Temperaturmessung nimmt. Die Ummantelung 54 und der Reflektor 52 können auch einteilig ausgeführt sein oder so ausgebildet sein, dass die Ummantelung 54 den Reflektor 52 in Position hält.

In Fig. 6 ist ein Strahlungsheizkörper 26 dargestellt, der zwei Temperatursensoren 60, 64 aufweist. Die Temperatursensoren 60, 64 sind an sich vom gleichen Typ wie der in Fig. 5 dargestellte. Sie sind in verschiedenem Abstand zum Mittelpunkt der Strahlungsheizkörpers 26 angeordnet und erlauben es dadurch, die Temperatur an verschiedenen Orten des Strahlungsheizkörpers 26 zu messen. Wie bei dem in Fig. 5 dargestellten Strahlungsheizkörper 26 auch, sind die Leitungen mit einer Ummantelung 62 versehen, um eine temperaturabhängige Widerstandsveränderung in den Leitungen und eine daraus resultierende Verfälschung der Temperaturmessung zu verhindern. Es könnten auch Reflektoren für jeden Temperatursensor vorgesehen sein.

## Patentansprüche

1. Verwendung einer an sich üblichen Glüh- oder Halogenlampe als elektrischer Temperatursensor (50) mit Widerstandsmessung zur Temperaturmessung, insbesondere in einem Strahlungsheizkörper (26).

2. Verwendung eines an sich üblichen Halogenstrahlungsheizers als elektrischer Temperatursensor (32, 42) mit Widerstandsmessung zur Temperaturmessung.

3. Verwendung einer an sich üblichen Glüh- oder Halogenlampe im Wechselbetrieb als elektrischer Temperatursensor (50) mit Widerstandsmessung zur Temperaturmessung und als Beleuchtung, insbesondere für Elektrowärmegeräte mit Innenbeleuchtung.

## Claims

1. Use of a per se known conventional filament or halogen lamp as an electrical temperature sensor (50) with resistance measurement for temperature measurement purposes, in particular in a radiant heater device (26).

2. Use of a per se known conventional halogen radiant heater as an electrical temperature sensor (32, 42) with resistance measurement for temperature measurement purposes.

3. Use of a per se known conventional filament or halogen lamp operating alternately as an electrical temperature sensor (50) with resistance measurement for temperature measurement purposes and as a lighting means, in particular for electrical warming appliances with internal illumination.

## Revendications

1. Utilisation d'une lampe à incandescence ou à halogène usuelle en soi en tant que capteur de température électrique (50) à mesure de résistance pour la mesure de température, en particulier dans un corps de chauffage à rayonnement (26).

2. Utilisation d'un élément de chauffage par rayonnement à halogène usuel en soi en tant que capteur de température électrique (32, 42) à mesure de résistance pour la mesure de température.

3. Utilisation d'une lampe à incandescence ou à halogène usuelle en soi en fonctionnement alterné en tant que capteur de température électrique (50) à mesure de résistance pour la mesure de température et en tant qu'éclairage, en particulier pour des appareils de chauffage électriques à éclairage intérieur.
